# EUROPÄISCHE PATENTANMELDUNG

(11) **EP 2 253 857 A1**
(43) Veröffentlichungstag der Anmeldung: **24.11.2010**
(21) Anmeldenummer: 10163184.4
(22) Anmeldetag: 18.05.2010
(51) Int. Cl.: F16B 19/10, B60D 1/60

(54) **Rastelement**

(30) Priorität: 19.05.2009 DE 202009004833 U
(71) Anmelder: Ebner, Johann, 89287 Bellenberg (DE)
(72) Erfinder: Ebner, Johann, 89287 Bellenberg (DE)
(74) Vertreter: Hutzelmann, Gerhard

(57) **Zusammenfassung**

Rastelement, insbesondere für Schwerlast-Lade- und Hebe-Geschirre, zum Verriegeln von klapp- und/oder schwenkbaren Auslegern, beispielsweise als Ersatz von Einsetzbolzen, wobei ein Grundkörper (1) vorgesehen ist, in dem ein Rastbolzen (5) eingesetzt ist, wobei der Rastbolzen (5) starr mit einer Betätigungseinrichtung (7) verbunden und mit einer Feder (8) belastet ist.

## Beschreibung

Die Erfindung bezieht sich auf ein Rastelement, insbesondere für Schwerlast-Lade- und Hebe-Geschirre, zum Verriegeln von klapp- und/oder schwenkbaren Auslegern, beispielsweise als Ersatz von Einsetzbolzen und Rastklammern.

Es sind vor allem Schwerlast-Lade- und Hebe-Geschirre gerade im mobilen Einsatz bei Abschleppunternehmen bekannt, die klapp- oder verstellbar sind und mit Steckbolzen, sogenannten Einsetzbolzen gesichert werden, die wiederum mit Splinten, Klappsplinten oder dergleichen abgesichert sind.

Eine derartige Ausgestaltung ist jedoch nicht praktikabel. Oftmals gehen Splinte oder gar Bolzen verloren. Auch ist es schon passiert, daß die Bolzen vereist sind und damit nicht mehr geöffnet werden konnten.

Der Erfindung liegt daher die Aufgabe zugrunde, ein Rastelement vorzuschlagen, welches Klapp- und Schiebeverbindungen sicher zu arretieren vermag, wobei die Rasteinrichtung unverlierbar ausgebildet sein soll.

Diese Aufgabe wird erfindungsgemäß dadurch gelöst, daß ein Grundkörper vorgesehen ist, in dem ein Rastbolzen eingesetzt ist, wobei der Rastbolzen starr mit einer Betätigungseinrichtung verbunden und mit einer Feder belastet ist.

Damit wird sichergestellt, daß der Rastbolzen in eine entsprechende Ausnehmung einzurasten vermag und aber mittels der Betätigungseinrichtung entriegelt werden kann.

Dabei hat es sich als sehr vorteilhaft erwiesen, wenn der Grundkörper auf seiner Außenseite ein Außengewinde aufweist.

Mit diesem Gewinde kann der Grundkörper zum Beispiel in bestehende Aufnahmen für Steckbolzen einfach eingesetzt und befestigt werden. Es ist dabei denkbar, daß entweder ein so grobes Gewinde vorgesehen wird, daß der Grundkörper direkt eingedreht werden kann, oder aber es wird ein Gewinde in die bestehende Aufnahme eingeschnitten.

Ebenfalls sehr vorteilhaft ist es erfindungsgemäß, wenn der Grundkörper auf seiner Außenseite einen Absatz aufweist.

Durch einen solchen Absatz kann die Eindrehtiefe des Grundkörpers begrenzt sein.

Es ist in diesem Zusammenhang auch denkbar, daß der Grundkörper durch beliebige Fügeverfahren am zu verriegelnden Gegenstand befestigt ist.

Eine äußerst vorteilhafte Ausgestaltung liegt auch vor, wenn der Grundkörper eine Ausnehmung aufweist, in der der Rastbolzen verschiebbar gelagert ist.

Damit kann der Rastbolzen im Grundkörper gleiten und in ein Gegenstück einrasten.

Eine weitere sehr vorteilhafte Ausgestaltung liegt auch vor, wenn in der Ausnehmung eine Druckfeder vorgesehen ist.

Damit wird der Rastbolzen zwangsweise in das Gegenstück eingerastet.

Es hat sich erfindungsgemäß auch als sehr vorteilhaft erwiesen, wenn eine Verbindungsstange vorgesehen ist, die starr mit dem Rastbolzen verbunden ist und durch den Grundkörper hindurchragt.

Dabei ist es äußerst vorteilhaft, wenn ein Griff kraftschlüssig mit der Verbindungsstange verbunden ist.

Damit kann der Rastbolzen auf einfache Art und Weise zurückgezogen werden

Eine weitere äußerst vorteilhafte Ausgestaltung der Erfindung liegt auch dann vor, wenn eine Anzeige vorgesehen ist, die das Einrasten des Rastbolzens anzuzeigen vermag.

Hierdurch kann auf einfache Art und Weise überprüft werden, ob der Rastbolzen korrekt eingerastet ist. Es ist dabei denkbar, daß die Anzeige mit der Betätigungseinrichtung bzw. dem Griff verbunden ist.

Ebenfalls sehr vorteilhaft ist es erfindungsgemäß auch, wenn die einzelnen Teile des Rastelements lösbar miteinander verbunden sind.

Damit kann das Rastelement zerlegt werden. Es besteht auch die Möglichkeit, Teile miteinander zu kombinieren.

Ebenfalls sehr vorteilhaft ist es, wenn Dichtlippen vorgesehen sind, die ein Eindringen von Spritzwasser, Staub oder dergleichen in das Rastelement verhindern.

Damit wird auch ein sicherer Betrieb im Winter gewährleistet. Die Dichtlippen können auch als Dichtungsringe oder dergleichen ausgebildet sein.

Eine weitere sehr vorteilhafte Ausgestaltung liegt auch vor, wenn wenigstens ein Schmiernippel vorgesehen ist.

Damit kann ebenfalls das Eindringen von Wasser oder Staub unterbunden werden.

Eine ebenfalls sehr vorteilhafte Ausgestaltung der Erfindung liegt auch vor, wenn eine Verriegelungseinrichtung vorgesehen ist, welche den Rastbolzen direkt oder indirekt in zumindest einer Position zu sichern vermag.

Damit kann der Rastbolzen gesichert werden und so die verriegelte oder entriegelte Position eingehalten werden.

Dabei hat es sich als sehr vorteilhaft erwiesen, wenn zumindest eine Umfangsnut und eine Längsnut im Grundkörper vorgesehen sind, in die ein Vorsprung des Rastbolzens einzugreifen vermag.

Hiermit kann auf einfache Art und Weise eine Verrastung erzeugt werden

Ebenfalls sehr vorteilhaft ist es, wenn an der Verbindungsstange ein Vorsprung oder dergleichen vorgesehen ist, welcher in ein entsprechendes Gegenstück einzugreifen vermag.

Auch hiermit kann eine Verriegelung realisiert werden.

Es hat sich erfindungsgemäß auch als sehr vorteilhaft erwiesen, wenn ein Gewinde und ein Gegengewinde vorgesehen sind, die den Rastbolzen gegenüber dem Grundkörper zu sichern vermögen.

Eine weitere sehr vorteilhafte Ausgestaltung liegt auch vor, wenn die Verriegelungseinrichtung am Griffstück vorgesehen ist.

Mit beiden Ausgestaltungen lässt sich eine ebenfalls gute Sicherung erzielen.

Eine sehr vorteilhafte Weiterbildung der Erfindung liegt auch vor, wenn eine Rastsperre vorgesehen ist, die ein Einrasten des Rastbolzens zu verhindern vermag.

Damit kann der Rastbolzen im entriegelten Zustand gehalten werden, um ein leichtes Verstellen eines Klapp- oder Schiebearmes zu ermöglichen.

Im Folgenden wird die Erfindung anhand mehrerer Ausführungsbeispiele veranschaulicht.

Dabei zeigen:
- Fig. 1: einen Schnitt durch eine erfindungsgemäße Verriegelungsvorrichtung,
- Fig. 2: eine schematische Ansicht einer in einen Klapparm eingesetzten Verriegelungsvorrichtung,

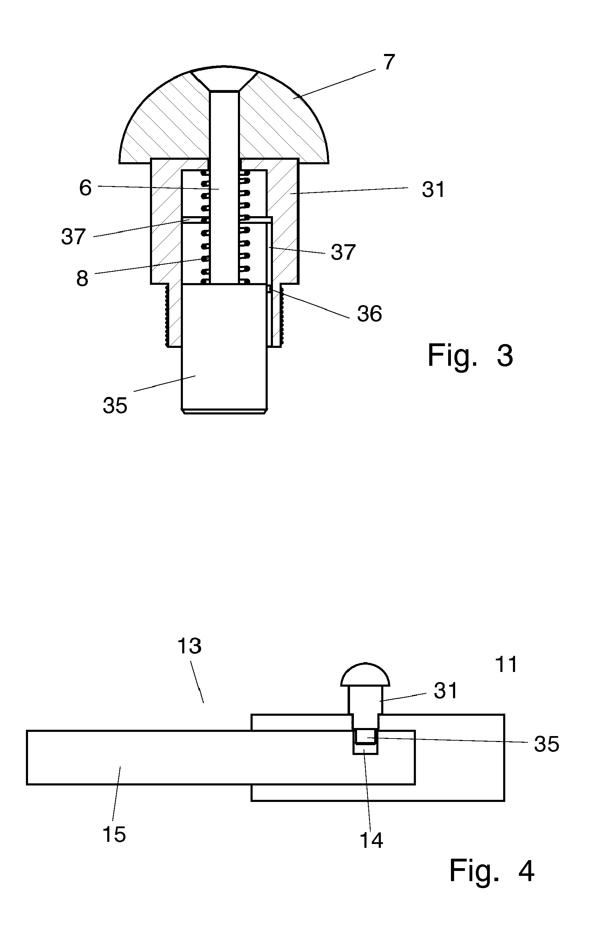

- Fig. 3: eine weitere Ausgestaltung einer Verriegelungsvorrichtung,
- Fig. 4: eine schematische Ansicht dieser Verriegelungsvorrichtung, die in einen Auszieharm eingesetzt ist, und

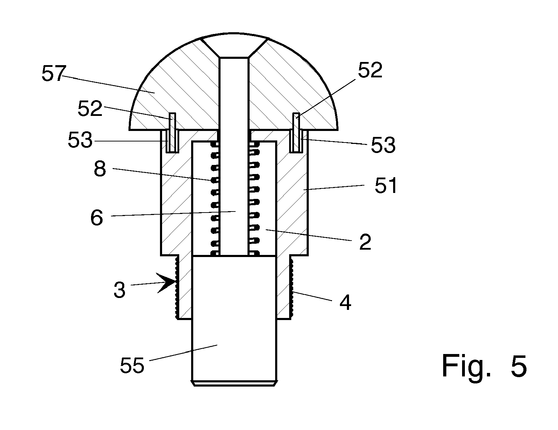

- Fig. 5: einen Schnitt durch eine Verriegelungsvorrichtung mit Rastsperre.

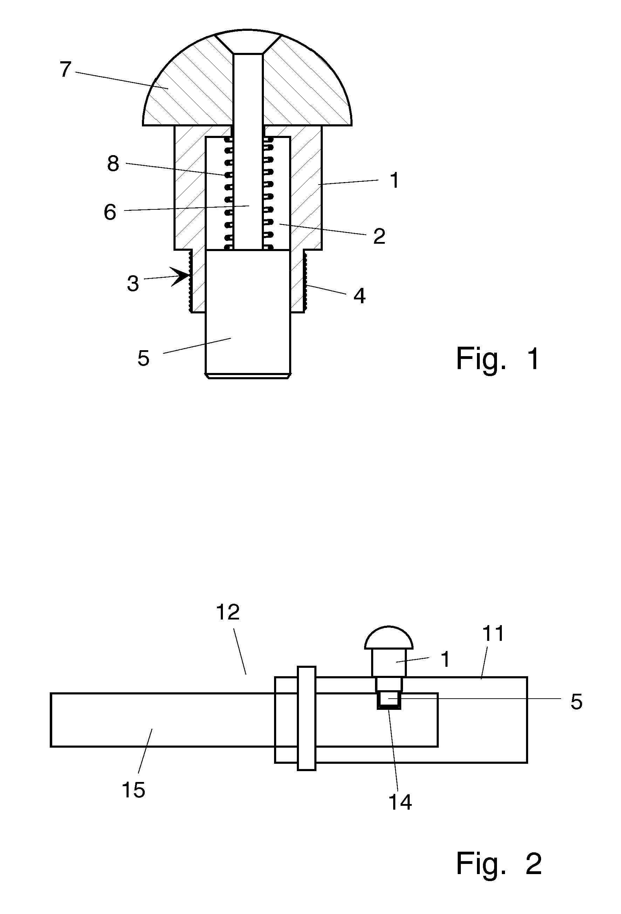

Mit 1 ist in Fig. 1 ein Grundkörper mit einer inneren Ausnehmung 2 und einem nach innen gezogenen äußeren Absatz 3 bezeichnet. Am Absatz 3 ist ein Außengewinde 4 vorgesehen, mit dem der Grundkörper in ein Außenteil 11 eines Klapparmes 12 oder eines Schiebearmes 13 eingeschraubt ist.

In der Ausnehmung 2 ist ein Rastbolzen 5 vorgesehen, der mittels einer Verbindungsstange 6 mit einem außerhalb des Grundkörpers 1 angeordneten Griff 7 verbunden ist. Um die Verbindungsstange 6 ist eine Druckfeder 8 angeordnet, die sich am Ende der Ausnehmung am Grundkörper 1 und am Rastbolzen 5 abstützt.

Damit wird der Rastbolzen 5 aus dem Grundkörper 1 herausgedrückt und in eine Verriegelungsposition gebracht.

Der Griff 7 ist so angeordnet, daß dieser in dieser Verriegelungsposition auf dem Grundkörper 1 aufliegt. Der Griff kann beispielsweise pilzförmig gestaltet oder aber als Rändelscheibe oder dergleichen ausgebildet sein.

Durch das Aufliegen des Griffes 7 kann auch auf einfache Art und Weise geprüft werden, ob der Rastbolzen 5 auch wie gewünscht eingerastet ist.

Der Rastbolzen greift dabei in eine Bohrung 14 eines Innenteiles 15 des Klapparmes 12 oder des Schiebearmes 13 ein.

Das Außengewinde 4 kann als Grobgewinde ausgebildet sein, das in bestehende Bohrungen der Arme 12 oder 13 direkt eingeschraubt werden kann. Es ist aber auch denkbar, daß in den Armen 12 oder 13 entsprechende Gewinde vorgesehen sind. Andere Fügemethoden sind zur Verbindung des Grundkörpers 1 mit den Armen 12 oder 13 denkbar.

Durch Herausziehen des Griffes 7 wird die Entriegelung vorgenommen. Die Teile der Arme 12 bzw. 13 können gegeneinander gedreht bzw. verschoben werden.

Die zweite Ausgestaltung zeigt eine weitere Rasteinrichtung 31, die zusätzlich zu der bereits beschriebenen Ausgestaltung gemäß Fig. 1 am Rastbolzen 35 eine Rastnase 36 vorgesehen hat, die in einer Nut 37 im Grundkörper 31 angeordnet und zu der Rastnase 36 korrespondierend ausgebildet ist.

Durch das Zusammenspiel von Rastnase 36 und Nut 37 kann eine Sicherung des Rastbolzens 35 in verriegelter und/oder entriegelter Position erzielt werden.

Zwischen Grundkörper 51 und Griff 57 können am Griff 57 Stifte 52 vorgesehen sein, die in Ausnehmungen 53 im Grundkörper 51 eingreifen. Durch verdrehen des Griffes 57 gegenüber dem Grundkörper 51 werden die Stifte 52 in eine Position gebracht, die ein Eingreifen in die Ausnehmungen 53 nicht mehr ermöglicht. Damit wird der Rastbolzen 55 daran gehindert einzurasten und verbleibt in einer zurückgezogenen Position. Damit ist eine Rastsperre für den Rastbolzen 55 geschaffen.

Es ist dabei auch denkbar, daß die Stifte 52 am Grundkörper 51 angeformt sind und in Ausnehmungen 53 eingreifen, die im Griff 57 angeordnet sind.

Es sind weitere Detailausführungen denkbar, die bereits oben beschrieben wurden.

In diesem Zusammenhang ist es denkbar, daß Dichtungen oder Dichtlippen vorgesehen sind, die ein Eindringen von Feuchtigkeit, Wasser und/oder Schmutz zwischen Grundkörper und Rastbolzen verhindern und so einen ungestörten Betrieb auch im Winter bei Frost oder in stark verschmutzten Umgebungen sicherstellen. Es ist dabei auch denkbar, daß beispielsweise ein Faltenbalg oder dergleichen zur Abdichtung vorgesehen ist.

## Patentansprüche

1. Rastelement, insbesondere für Schwerlast-Lade- und Hebe-Geschirre, zum Verriegeln von klapp- und/oder schwenkbaren Auslegern, beispielsweise als Ersatz von Einsetzbolzen, **dadurch gekennzeichnet, daß** ein Grundkörper vorgesehen ist, in dem ein Rastbolzen eingesetzt ist, wobei der Rastbolzen starr mit einer Betätigungseinrichtung verbunden und mit einer Feder belastet ist.

2. Rastelement nach Anspruch 1, **dadurch gekennzeichnet, daß** der Grundkörper auf seiner Außenseite ein Außengewinde aufweist und/oder daß der Grundkörper auf seiner Außenseite einen Absatz aufweist und/oder daß der Grundkörper eine Ausnehmung aufweist, in der der Rastbolzen verschiebbar gelagert ist, wobei in der Ausnehmung eine Druckfeder vorgesehen sein kann.

3. Rastelement nach einem der vorangehenden Ansprüche, **dadurch gekennzeichnet, daß** eine Verbindungsstange vorgesehen ist, die starr mit dem Rastbolzen verbunden ist und durch den Grundkörper hindurchragt.

4. Rastelement nach einem der vorangehenden Ansprüche, **dadurch gekennzeichnet, daß** ein Griff kraftschlüssig mit der Verbindungsstange verbunden ist.

5. Rastelement nach einem der vorangehenden Ansprüche, **dadurch gekennzeichnet, daß** eine Anzeige vorgesehen ist, die das Einrasten des Rastbolzens anzuzeigen vermag.

6. Rastelement nach einem der vorangehenden Ansprüche, **dadurch gekennzeichnet, daß** die einzelnen Teile des Rastelements lösbar miteinander verbunden sind.

7. Rastelement nach einem der vorangehenden Ansprüche, **dadurch gekennzeichnet, daß** Dichtlippen vorgesehen sind, die ein Eindringen von Spritzwasser, Staub oder dergleichen in das Rastelement verhindern.

8. Rastelement nach einem der vorangehenden Ansprüche, **dadurch gekennzeichnet, daß** wenigstens ein Schmiernippel vorgesehen ist.

9. Rastelement nach einem der vorangehenden Ansprüche, **dadurch gekennzeichnet, daß** eine Verriegelungseinrichtung vorgesehen ist, welche den Rastbolzen direkt oder indirekt in zumindest einer Position zu sichern vermag.

10. Rastelement nach Anspruch 9, **dadurch gekennzeichnet, daß** zumindest eine Umfangsnut und eine Längsnut im Grundkörper vorgesehen sind, in die ein Vorsprung des Rastbolzens einzugreifen vermag.

11. Rastelement nach Anspruch 9 oder 10, **dadurch gekennzeichnet, daß** an der Verbindungsstange ein Vorsprung oder dergleichen vorgesehen ist, welcher in ein entsprechendes Gegenstück einzugreifen vermag.

12. Rastelement nach Anspruch 9, 10 oder 11, **dadurch gekennzeichnet, daß** ein Gewinde und ein Gegengewinde vorgesehen sind, die den Rastbolzen gegenüber dem Grundkörper zu sichern vermögen.

13. Rastelement nach einem der Ansprüche 9 bis 12, **dadurch gekennzeichnet, daß** die Verriegelungseinrichtung am Griffstück vorgesehen ist.

14. Rastelement nach einem der vorangehenden Ansprüche, **dadurch gekennzeichnet, daß** eine Rastsperre vorgesehen ist, die ein Einrasten des Rastbolzens zu verhindern vermag.

## Geänderte Patentansprüche

### Geänderte Patentansprüche gemäss Regel 137(2) EPÜ.

**1.** Rastelement, für Lade- und Hebe-Geschirre, insbesondere für Schwerlast-Lade- und Hebe-Geschirre, zum Verriegeln von klapp- und/oder schwenkbaren Auslegern, als Ersatz von Einsetzbolzen, **dadurch gekennzeichnet, daß** ein Grundkörper (1) vorgesehen ist, in dem ein Rastbolzen (5) eingesetzt ist, wobei der Rastbolzen (5) starr mit einer Betätigungseinrichtung (7) verbunden und mit einer Feder (8) in Rastrichtung belastet ist und gegen Eindringen von Feuchtigkeit und Schmutz geschützt ist.

**2.** Rastelement nach Anspruch 1, **dadurch gekennzeichnet, daß** der Grundkörper (1) auf seiner Außenseite ein Außengewinde (4) aufweist und/oder daß der Grundkörper (1) auf seiner Außenseite einen Absatz (3) aufweist und/oder daß der Grundkörper (1) eine Ausnehmung (2) aufweist, in der der Rastbolzen (5) verschiebbar gelagert ist, wobei in der Ausnehmung (2) eine Druckfeder (8) vorgesehen sein kann.

**3.** Rastelement nach einem der vorangehenden Ansprüche, **dadurch gekennzeichnet, daß** eine Verbindungsstange (6) vorgesehen ist, die starr mit dem Rastbolzen (5) verbunden ist und durch den Grundkörper (1) hindurchragt.

**4.** Rastelement nach einem der vorangehenden Ansprüche, **dadurch gekennzeichnet, daß** ein Griff (7) kraftschlüssig mit der Verbindungsstange (6) verbunden ist.

**5.** Rastelement nach einem der vorangehenden Ansprüche, **dadurch gekennzeichnet, daß** eine Anzeige vorgesehen ist, die das Einrasten des Rastbolzens (5) anzuzeigen vermag.

**6.** Rastelement nach einem der vorangehenden Ansprüche, **dadurch gekennzeichnet, daß** die einzelnen Teile des Rastelements lösbar miteinander verbunden sind.

**7.** Rastelement nach einem der vorangehenden Ansprüche, **dadurch gekennzeichnet, daß** Dichtlippen vorgesehen sind, die ein Eindringen von Spritzwasser, Staub oder dergleichen in das Rastelement verhindern.

**8.** Rastelement nach einem der vorangehenden Ansprüche, **dadurch gekennzeichnet, daß** wenigstens ein Schmiernippel vorgesehen ist.

**9.** Rastelement nach einem der vorangehenden Ansprüche, **dadurch gekennzeichnet, daß** eine Verriegelungseinrichtung vorgesehen ist, welche den Rastbolzen (5) direkt oder indirekt in zumindest einer Position zu sichern vermag.

**10.** Rastelement nach Anspruch 9, **dadurch gekennzeichnet, daß** zumindest eine Umfangsnut und eine Längsnut im Grundkörper (1) vorgesehen sind, in die ein Vorsprung des Rastbolzens-(5) einzugreifen vermag.

**11.** Rastelement nach Anspruch 9 oder 10, **dadurch gekennzeichnet, daß** an der Verbindungsstange (6) ein Vorsprung oder dergleichen vorgesehen ist, welcher in ein entsprechendes Gegenstück einzugreifen vermag.

**12.** Rastelement nach Anspruch 9, 10 oder 11, **dadurch gekennzeichnet, daß** ein Gewinde und ein Gegengewinde vorgesehen sind, die den Rastbolzen (5) gegenüber dem Grundkörper (1) zu sichern vermögen.

**13.** Rastelement nach einem der Ansprüche 9 bis 12, **dadurch gekennzeichnet, daß** die Verriegelungseinrichtung am Griffstück (7) vorgesehen ist.

**14.** Rastelement nach einem der vorangehenden Ansprüche, **dadurch gekennzeichnet, daß** eine Rastsperre (52) vorgesehen ist, die ein Einrasten des Rastbolzens (55) zu verhindern vermag.
